# FASCICULE DE BREVET EUROPEEN

(11) **EP 2 318 202 B1**
(45) Date de publication et mention de la délivrance du brevet: **05.12.2018**
(21) Numéro de dépôt: 09777295.8
(22) Date de dépôt: 20.07.2009
(51) Int. Cl.: B29C 73/16, B29C 73/20, B60C 1/00, B60C 19/12

(54) **COMPOSITION AUTO-OBTURANTE POUR OBJET PNEUMATIQUE**
SELBSTABDICHTENDE ZUSAMMENSETZUNG FÜR EINEN AUFBLASBAREN ARTIKEL
SELF-SEALING COMPOSITION FOR AN INFLATABLE ARTICLE

(30) Priorité: 24.07.2008 FR 0855039
(43) Date de publication de la demande: 11.05.2011
(73) Titulaire: Compagnie Générale des Etablissements Michelin, 63000 Clermont-Ferrand (FR)
(72) Inventeur: VOGE, Bozena, F-63800 Cournon d'Auvergne (FR); VASSEUR, Didier, F-63100 Clermont-Ferrand (FR); MERINO LOPEZ, José, F-63200 Riom (FR); PIALOT, Frédéric, F-63190 Moissat (FR)
(74) Mandataire: Desbordes, Guillaume
(86) Numéro de dépôt international: PCT/EP2009/005242
(87) Numéro de publication internationale: WO 2010/009849

(56) Documents cités:
- FR-A- 2 866 028
- FR-A- 2 877 348
- US-A- 4 919 183
- US-A1- 2006 111 494
- US-A1- 2006 194 898

## Description

La présente invention est relative aux compositions auto-obturantes (*self-sealing*) et à leur utilisation comme couches anti-crevaison dans tout type d'objet « pneumatique », c'est-à-dire, par définition, tout objet qui prend sa forme utilisable quand on le gonfle d'air.

Elle se rapporte plus particulièrement à l'utilisation de telles compositions dans des objets pneumatiques, notamment dans des bandages pneumatiques, pour obturer d'éventuels trous dus à des perforations en service.

Depuis quelques années, en particulier, les manufacturiers de bandages pneumatiques consentent des efforts particulièrement importants afin de développer des solutions originales à un problème datant du début même de l'utilisation des roues chaussées de bandages pneumatiques de type gonflés, à savoir comment permettre au véhicule de poursuivre sa route malgré une perte importante ou totale de pression d'un ou plusieurs bandages pneumatiques. Pendant des décennies, la roue de secours fut considérée comme la solution unique et universelle. Puis, plus récemment, les avantages considérables liés à sa suppression éventuelle sont apparus. Le concept de "mobilité étendue" se développe. Les techniques associées permettent de rouler avec le même bandage pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours.

Des compositions auto-obturantes susceptibles de permettre d'atteindre un tel objectif, par définition aptes à assurer automatiquement, c'est-à-dire sans aucune intervention externe, l'étanchéité d'un bandage pneumatique en cas de perforation de ce dernier par un corps étranger tel qu'un clou, sont particulièrement difficiles à mettre au point.

Pour pouvoir être utilisable, une couche auto-obturante doit satisfaire à de nombreuses conditions de nature physique et chimique. Elle doit notamment être efficace dans une très large gamme de températures d'utilisation et ce pendant toute la durée de vie des bandages pneumatiques. Elle doit être capable d'obturer le trou lorsque l'objet perforant reste en place ; à l'expulsion de ce dernier, elle doit pouvoir combler le trou et rendre le bandage pneumatique étanche.

De nombreuses solutions ont été imaginées mais n'ont pas pu vraiment se développer dans les bandages pneumatiques pour véhicules, notamment par manque de stabilité dans le temps ou d'efficacité dans des conditions extrêmes de température d'utilisation, ou encore en raison de difficultés de fabrication et/ou d'utilisation de ces compositions auto-obturantes.

Ainsi, pour contribuer à maintenir une bonne efficacité à haute température, le document US-A-4 113 799 (ou FR-A-2 318 042) a proposé comme couche auto-obturante une composition comportant une combinaison de caoutchoucs butyls de haute et basse masses moléculaires réticulés partiellement, en présence éventuellement d'une faible part d'élastomère thermoplastique styrénique.

Le document US-A-4 228 839 a proposé comme couche auto-obturante pour pneumatique un mélange de caoutchouc contenant une première matière polymère qui se dégrade par irradiation, telle que du polyisobutylène, et une seconde matière polymère qui se réticule par irradiation, préférentiellement un caoutchouc butyl.

Le document US-A-4 426 468 a lui aussi proposé une composition auto-obturante pour pneumatique à base de caoutchouc butyl à très haute masse moléculaire, réticulé.

Un inconvénient connu des caoutchoucs butyls est qu'ils présentent des pertes hystérétiques importantes (soit un niveau élevé de tan δ) sur un spectre large de température, inconvénient qui se répercute sur les compositions auto-obturantes elles-mêmes avec une forte augmentation de l'hystérèse et une pénalisation notable de la résistance au roulement des bandages pneumatiques.

Des compositions auto-obturantes à base d'élastomère diénique insaturé (caoutchouc naturel) ont également été décrites, pour le même type d'application, en particulier dans les brevets US-A-4 913 209, US-A-5 085 942 et US-A-5 295 525, US-A1-2006/0111494.

Ces compositions se caractérisant par la présence combinée d'un taux élevé de résine hydrocarbonée à titre d'agent tackifiant (*"tackifier"*), toujours supérieur à 100 pce, et d'une quantité importante d'élastomère (isoprène) à l'état liquide. Or, un taux aussi élevé de résine, outre le fait que son incorporation nécessite un malaxage très long de la matrice élastomérique, peut être également préjudiciable à l'hystérèse et en conséquence à la résistance au roulement des bandages pneumatiques. En outre, une quantité importante d'élastomère liquide donne une fluidité élevée à la composition qui est source d'autres inconvénients, notamment d'un risque de fluage de la composition auto-obturante lors d'une utilisation à température relativement élevée (typiquement supérieure à 60°C) fréquemment rencontrée lors de l'utilisation de certains bandages pneumatiques.

Poursuivant leurs recherches, les Demanderesses ont découvert une composition auto-obturante nouvelle qui ne nécessite pas de caoutchouc butyl, ni de quantités importantes de résine hydrocarbonée et d'élastomère liquide. Cette composition présente dans un objet pneumatique une performance anti-crevaison améliorée par rapport aux compositions auto-obturantes de l'art antérieur, particulièrement lors d'une utilisation à une température relativement élevée.

En conséquence, selon un premier objet, la présente invention concerne une composition d'élastomère auto-obturante, utilisable notamment comme couche anti-crevaison dans un objet pneumatique, ladite composition comportant au moins, pce signifiant parties en poids pour cent parties d'élastomère solide :
- à titre d'élastomère majoritaire, un élastomère diénique insaturé ;
- entre 30 et 90 pce d'une résine hydrocarbonée ;
- 0 à moins de 30 pce d'une charge.

Selon un autre objet, la présente invention concerne un objet pneumatique pourvu d'une couche anti-crevaison comprenant, à titre de composition auto-obturante, une composition auto-obturante selon l'invention.

De préférence, l'objet pneumatique de l'invention, notamment un bandage pneumatique, comporte également une couche étanche à l'air qui, associée à la couche anti-crevaison ci-dessus, constitue un stratifié étanche à l'air et anti-crevaison particulièrement avantageux lorsque ledit stratifié est disposé par exemple sur la paroi interne dudit objet ou bandage pneumatique.

La présente invention concerne particulièrement les bandages pneumatiques destinés à équiper des véhicules à moteur de type tourisme ou grand tourisme, SUV (*Sport Utility Vehicles*), deux roues (notamment motos, vélos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

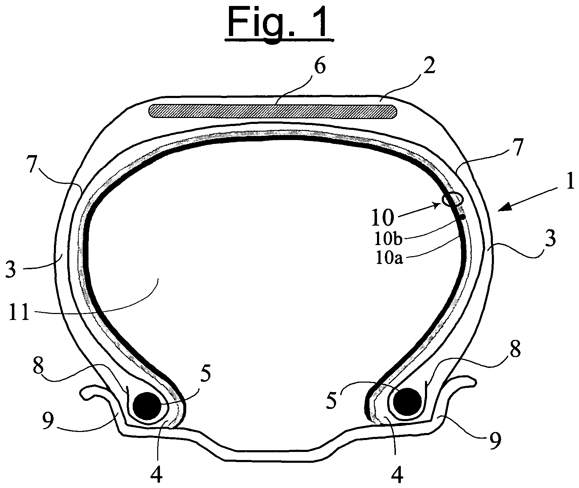

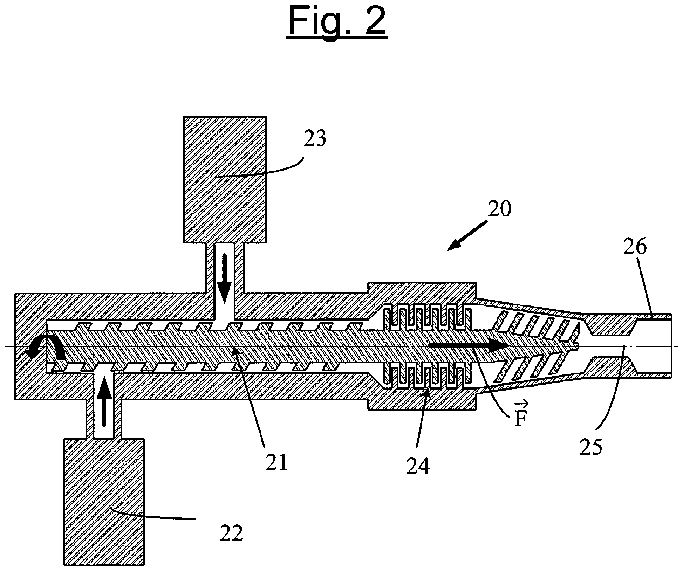

L'invention ainsi que ses avantages seront aisément compris à la lumière de la description et des exemples de réalisation qui suivent, ainsi que des figures 1 et 2 relatives à ces exemples qui schématisent de manière simple, sans respect d'une échelle spécifique :
- en coupe radiale, un exemple de bandage pneumatique utilisant une composition auto-obturante conforme à l'invention (Fig. 1) ;
- un exemple de dispositif d'extrusion-mélangeage utilisable pour la fabrication d'une composition auto-obturante conforme à l'invention (Fig. 2).

### I. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de la borne "a" jusqu'à la borne "b" c'est-à-dire incluant les bornes strictes "a" et "b".

### 1-1. Composition auto-obturante

La composition ou matière auto-obturante de l'invention est une composition élastomère comportant au moins, à titre d'élastomère majoritaire (préférentiellement pour plus de 50 pce), un élastomère diénique insaturé et entre 40 et 90 pce d'une résine hydrocarbonée (pce signifiant parties en poids pour cent parties d'élastomère solide). Elle a pour autre caractéristique essentielle d'être dépourvue de charge ou, tout au plus, d'en comporter moins de 30 pce.

### I-1-A. Elastomère diénique insaturé

Par élastomère ou caoutchouc "diénique", on rappelle que doit être compris, de manière connue, un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories, saturés ou insaturés. On entend dans la présente demande par élastomère diénique "insaturé" (ou "essentiellement insaturé") un élastomère diénique issu au moins en partie de monomères diènes conjugués et ayant un taux de motifs ou unités issus de diènes conjugués qui est supérieur à 30% (% en moles) ; c'est ainsi que sont exclus de cette définition des élastomères diéniques tels que les caoutchoucs butyl ou les copolymères de diènes et d'alpha-oléfines type EPDM qui peuvent être qualifiés d'élastomères diéniques "saturés" ou "essentiellement saturés" en raison de leur taux réduit de motifs d'origine diénique (toujours inférieur à 15% en moles).

On utilise préférentiellement un élastomère diénique insaturé dont le taux (% en moles) de motifs d'origine diénique (diènes conjugués) est supérieur à 50%, un tel élastomère diénique étant plus préférentiellement choisi dans le groupe constitué par les polybutadiènes (BR), le caoutchouc naturel (NR), les polyisoprènes de synthèse (IR), les copolymères de butadiènes (par exemple de butadiène-styrène ou SBR), les copolymères d'isoprène (bien entendu, autres que caoutchouc butyl) et les mélanges de tels élastomères.

Par opposition à des élastomères diéniques du type liquides, l'élastomère diénique insaturé de la composition de l'invention est par définition solide. De préférence, sa masse moléculaire moyenne en nombre (Mn) est comprise entre 100 000 et 5 000 000, plus préférentiellement entre 200 000 et 4 000 000 g/mol. La valeur Mn est déterminée de manière connue, par exemple par SEC : solvant tétrahydrofurane ; température 35°C; concentration 1 g/l ; débit 1 ml/min ; solution filtrée sur filtre de porosité 0,45 µm avant injection ; étalonnage de Moore avec des étalons (par exemple de polyisoprène) ; jeu de 4 colonnes "WATERS" en série ("STYRAGEL" HMW7, HMW6E, et 2 HT6E) ; détection par réfractomètre différentiel ("WATERS 2410") et son logiciel d'exploitation associé ("WATERS EMPOWER").

Plus préférentiellement, l'élastomère diénique insaturé de la composition de l'invention est un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les copolymères de butadiène-isoprène (BIR), les copolymères de styrène-isoprène (SIR), les copolymères de styrène-butadiène-isoprène (SBIR) et les mélanges de ces élastomères.

Cet élastomère isoprénique est de préférence du caoutchouc naturel ou un polyisoprène cis-1,4 de synthèse; parmi ces polyisoprènes de synthèse, sont utilisés préférentiellement des polyisoprènes ayant un taux (% molaire) de liaisons cis-1,4 supérieur à 90%, plus préférentiellement encore supérieur à 95%, notamment supérieur à 98%.

L'élastomère diénique insaturé ci-dessus, notamment élastomère isoprénique tel que caoutchouc naturel, peut constituer la totalité de la matrice élastomère ou la majorité pondérale (de préférence pour plus de 50%, plus préférentiellement pour plus de 70%) de cette dernière lorsqu'elle comporte un ou plusieurs autre(s) élastomère(s), diéniques ou non diéniques, par exemple du type thermoplastiques. En d'autres termes et de préférence, dans la composition de l'invention, le taux d'élastomère diénique insaturé (solide), notamment d'élastomère isoprénique tel que caoutchouc naturel, est supérieur à 50 pce, plus préférentiellement supérieur à 70 pce. Plus préférentiellement encore, ce taux d'élastomère diénique insaturé, notamment d'élastomère isoprénique tel que caoutchouc naturel, est supérieur à 80 pce.

Selon un mode de réalisation particulier, l'élastomère diénique insaturé ci-dessus, notamment lorsqu'il s'agit d'un élastomère diénique isoprénique tel que du caoutchouc naturel, est le seul élastomère présent dans la composition auto-obturante de l'invention. Mais il pourrait aussi, selon d'autres modes de réalisation possibles, être associé à d'autres élastomères (solides) minoritaires en poids, qu'il s'agisse d'élastomères diéniques insaturés (par exemple BR ou SBR) voire saturés (par exemple butyl), ou encore d'élastomères autres que diéniques, par exemple des élastomères thermoplastiques styréniques (dits "TPS"), par exemple choisis dans le groupe constitué par les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

De manière surprenante, cet élastomère diénique insaturé, non chargé (ou très faiblement chargé), s'est révélé capable, après ajout d'une résine hydrocarbonée thermoplastique dans le domaine étroit préconisé, de remplir la fonction d'une composition auto-obturante performante, comme cela est expliqué en détail dans la suite de l'exposé.

### I-1-B. Résine hydrocarbonée

Le deuxième constituant essentiel de la composition auto-obturante est une résine hydrocarbonée.

La dénomination "résine" est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods*"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

Leur température de transition vitreuse (Tg) est préférentiellement supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*), température à laquelle le produit, par exemple sous forme de poudre, s'agglutine ; cette donnée tend à remplacer le point de fusion, assez mal défini, des résines en général. La température de ramollissement d'une résine hydrocarbonée est généralement supérieure d'environ 50 à 60°C à la valeur de Tg.

Dans la composition de l'invention, la température de ramollissement de la résine est préférentiellement supérieure à 40°C (en particulier comprise entre 40°C et 140°C), plus préférentiellement supérieure à 50°C (en particulier comprise entre 50°C et 135°C).

Ladite résine est utilisée à un taux pondéral compris entre 30 et 90 pce. En dessous de 30 pce, la performance anti-crevaison s'est avérée insuffisante en raison d'une rigidité trop importante de la composition, alors qu'au-delà de 90 pce, on s'expose à une tenue mécanique insuffisante du matériau avec en outre un risque de performance dégradée à haute température (typiquement supérieure à 70°C). Pour ces raisons, le taux de résine est préférentiellement compris entre 40 et 80 pce, plus préférentiellement encore au moins égal à 45 pce, notamment compris dans un domaine de 45 à 75 pce.

Selon un mode de réalisation préférentiel de l'invention, la résine hydrocarbonée présente au moins une quelconque, plus préférentiellement l'ensemble des caractéristiques suivantes :
- une Tg supérieure à 25°C ;
- un point de ramollissement supérieur à 50°C (en particulier compris entre 50°C et 135°C) ;
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine hydrocarbonée présente au moins une quelconque, plus préférentiellement l'ensemble des caractéristiques suivantes :
- une Tg comprise entre 25°C et 100°C (notamment entre 30°C et 90°C) ;
- un point de ramollissement supérieur à 60°C, en particulier compris entre 60°C et 135°C ;
- une masse moyenne Mn comprise entre 500 et 1500 g/mol ;
- un indice de polymolécularité Ip inférieur à 2.

La Tg est mesurée selon la norme ASTM D3418 (1999). Le point de ramollissement est mesuré selon la norme ISO 4625 (méthode "Ring and Bail"). La macrostructure (Mw, Mn et Ip) est déterminée par chromatographie d'exclusion stérique (SEC): solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac" ou par Kolon sous dénomination "Hikorez" pour ce qui concerne les résines coupe C₅/ styrène ou résines coupe C₅/ coupe C₉, ou encore par la société Struktol sous dénomination "40 MS" ou "40 NS" ou par la société Exxon Mobil sous dénomination "Escorez" (mélanges de résines aromatiques et/ou aliphatiques).

### I-1-C. Charge

La composition de l'invention a pour caractéristique essentielle d'être non chargée ou très faiblement chargée, c'est-à-dire de comporter de 0 à moins de 30 pce de charge.

Par charge, on entend ici tout type de charge, qu'elle soit renforçante (typiquement à particules nanométriques, de taille moyenne en poids préférentiellement inférieure à 500 nm, notamment entre 20 et 200 nm) ou qu'elle soit non-renforçante ou inerte (typiquement à particules micrométriques, de taille moyenne en poids supérieure à 1 µm, par exemple entre 2 et 200 µm).

Ces charges, renforçantes ou pas, sont essentiellement là que pour donner de la stabilité dimensionnelle, c'est-à-dire une tenue mécanique minimale à la composition finale. On en met de préférence d'autant moins dans la composition que la charge est connue comme renforçante vis-à-vis d'un élastomère, notamment d'un élastomère isoprénique tel que du caoutchouc naturel.

Une quantité trop élevée, notamment supérieure à 30 pce ne permet plus d'atteindre les propriétés minimales requises de souplesse, de déformabilité et d'aptitude au fluage. Pour ces raisons, la composition de l'invention comporte préférentiellement 0 à moins de 20 pce, plus préférentiellement 0 à moins de 10 pce de charge.

A titre d'exemples de charges connues comme renforçantes par l'homme du métier, on citera notamment des nanoparticules de noir de carbone ou d'une charge inorganique renforçante, ou un coupage de ces deux types de charge.

Comme noirs de carbone, par exemple, conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme charges inorganiques renforçantes conviennent notamment des charges minérales du type silice (SiO₂), notamment les silice précipitées ou pyrogénées présentant une surface BET inférieure à 450 m²/g, de préférence de 30 à 400 m²/g.

A titre d'exemples de charges connues comme non-renforçantes ou inertes par l'homme du métier, on citera notamment des microparticules de carbonates de calcium naturels (craie) ou synthétiques, de silicates synthétiques ou naturels (tels que kaolin, talc, mica), de silices broyées, oxydes de titane, alumines ou encore aluminosilicates. A titre d'exemples de charges lamellaires, on peut citer également des particules de graphite. Des charges colorantes ou colorées pourront être avantageusement utilisées pour colorer la composition selon la couleur désirée.

L'état physique sous lequel se présente la charge est indifférent, que ce soit sous forme de poudre, de microperles, de granulés, de billes ou toute autre forme densifiée appropriée. Bien entendu, on entend également par charge des mélanges de différentes charges, renforçantes et/ou non renforçantes.

L'homme de l'art saura, à la lumière de la présente description, ajuster la formulation de la composition auto-obturante afin d'atteindre les niveaux de propriétés souhaités et adapter la formulation à l'application spécifique envisagée.

Selon un mode de réalisation particulier et avantageux de l'invention, si une charge renforçante est présente dans la composition de l'invention, son taux est préférentiellement inférieur à 5 pce (soit entre 0 et 5 pce), en particulier inférieur à 2 pce (soit entre 0 et 2 pce). De tels taux se sont avérés particulièrement favorables au procédé de fabrication de la composition de l'invention, tout en offrant à cette dernière d'excellentes performances auto-obturantes. On utilise plus préférentiellement un taux compris entre 0,5 et 2 pce, en particulier lorsqu'il s'agit de noir de carbone.

### 1-1-D. Additifs divers

Les constituants de base précédemment décrits, à savoir élastomère diénique insaturé, résine plastifiante hydrocarbonée et charge optionnelle sont suffisants à eux seuls pour que la composition auto-obturante remplisse totalement sa fonction anti-crevaison vis-à-vis des objets pneumatiques dans lesquels elle est utilisée.

Toutefois, divers autres additifs peuvent être ajoutés, typiquement en faible quantité (préférentiellement à des taux inférieurs à 20 pce, plus préférentiellement inférieurs à 15 pce), comme par exemple des agents de protection tels que des anti-UV, anti-oxydants ou anti-ozonants, divers autres stabilisants, des agents colorants avantageusement utilisables pour la coloration de la composition auto-obturante. Selon l'application visée, des fibres, sous forme de fibres courtes ou de pulpe, pourraient être éventuellement ajoutées pour donner plus de cohésion à la composition auto-obturante.

Selon un mode de réalisation préférentiel de l'invention, la composition auto-obturante comporte en outre un système de réticulation de l'élastomère diénique insaturé. Ce système de réticulation est préférentiellement un système de réticulation à base de soufre, en d'autres termes un système dit "de vulcanisation".

Le système de vulcanisation à base de soufre comporte de préférence, à titre d'activateur de vulcanisation, un dérivé guanidique c'est-à-dire une guanidine substituée. Les guanidines substituées sont bien connues de l'homme du métier (voir par exemple WO 00/05300) : on citera à titre d'exemples non limitatifs la N,N'-diphénylguanidine (en abrégé "DPG"), la triphénylguanidine ou encore la di-o-tolylguanidine. On utilise de préférence la DPG.

Dans ce système de vulcanisation, pour une performance d'auto-obturation optimale, le taux de soufre est de préférence compris entre 0,1 et 1,5 pce, en particulier entre 0,2 et 1,2 pce (par exemple entre 0,2 et 1,0 pce) et le taux de dérivé guanidique est lui-même compris entre 0 et 1,5 pce, en particulier entre 0 et 1,0 pce (notamment dans un domaine de 0,2 à 0,5 pce).

Ledit système ne nécessite pas la présence d'un accélérateur de vulcanisation. Selon un mode de réalisation préférentiel, la composition peut donc être dépourvue d'un tel accélérateur, ou tout au plus en comporter moins de 1 pce, plus préférentiellement moins de 0,5 pce. Selon un autre mode de réalisation avantageux, le système de vulcanisation ci-dessus peut être dépourvu de zinc ou d'oxyde de zinc (connus comme activateurs de vulcanisation).

Selon un autre mode de réalisation possible de l'invention, on peut aussi utiliser un donneur de soufre en lieu et place du soufre lui-même ; les donneurs de soufre sont bien connus de l'homme du métier. Typiquement, la quantité d'un tel donneur de soufre sera de préférence ajustée entre 0,5 et 10 pce, plus préférentiellement entre 1 et 5 pce, de manière à atteindre les taux de soufre équivalents préférentiels indiqués précédemment.

Après cuisson, un système de vulcanisation tel que décrit ci-dessus apporte une cohésion suffisante à la composition, sans lui conférer une vulcanisation véritable : la réticulation mesurable, via une méthode de gonflement classique connue de l'homme du métier, avoisine en fait le seuil de détection.

Outre les élastomères précédemment décrits, la composition auto-obturante pourrait aussi comporter, toujours selon une fraction pondérale minoritaire par rapport à l'élastomère diénique insaturé, des polymères autres que des élastomères, tels que par exemple des polymères thermoplastiques compatibles avec l'élastomère diénique insaturé.

### 1-2. Fabrication de la composition auto-obturante

La composition précédemment décrite peut être fabriquée par tout moyen approprié, par exemple par mélangeage et/ou malaxage dans des mélangeurs à palette ou à cylindres, jusqu'à obtention d'un mélange intime et homogène de ses différents composants.

Toutefois, le problème de fabrication suivant peut se poser : en l'absence de charge, ou tout au moins d'une quantité notable de charge, la composition est faiblement cohésive. Ce manque de cohésion peut être tel que le pouvoir collant de la composition, dû par ailleurs à la présence d'un taux relativement élevé de résine hydrocarbonée, n'est pas compensé et l'emporte ; il s'ensuit alors un risque de collage parasite sur les outils de mélangeage, qui peut être rédhibitoire dans des conditions de mise en oeuvre industrielle.

Pour pallier les problèmes ci-dessus, la composition auto-obturante de l'invention, lorsqu'elle comporte un système de vulcanisation, peut être préparée selon un procédé comportant les étapes suivantes :
a) on fabrique dans un premier temps un masterbatch comportant au moins l'élastomère diénique insaturé et entre 30 et 90 pce de la résine hydrocarbonée, en mélangeant ces différents composants dans un mélangeur, à une température ou jusqu'à une température dite "température de mélangeage à chaud" ou "première température" qui est supérieure à la température de ramollissement de la résine hydrocarbonée ;
b) puis on incorpore audit masterbatch au moins le système de réticulation, en mélangeant le tout, dans le même mélangeur ou dans un mélangeur différent, à une température ou jusqu'à une température dite "seconde température" qui est maintenue inférieure à 100°C, pour l'obtention de ladite composition auto-obturante.

Les première et seconde températures ci-dessus sont bien entendu celles du masterbatch et de la composition auto-obturante, respectivement, mesurables in situ et non pas les températures de consigne des mélangeurs eux-mêmes.

Par "masterbatch" (ou "mélange-maître") doit être entendu ici, par définition, le mélange d'au moins l'élastomère diénique et de la résine hydrocarbonée, mélange précurseur de la composition auto-obturante finale, prête à l'emploi.

Peuvent être éventuellement incorporés à ce masterbatch divers additifs, qu'ils soient destinés au masterbatch proprement dit (par exemple un agent de stabilisation, un agent colorant ou anti-UV, un antioxydant, etc.) ou à la composition auto-obturante finale à laquelle est destiné le masterbatch.

Un tel procédé s'est avéré particulièrement bien adapté à la fabrication rapide, dans des conditions de mise en oeuvre acceptables du point de vue industriel, d'une composition auto-obturante performante à base d'élastomère diénique et de résine hydrocarbonée, cette composition pouvant comporter des taux élevés de résine hydrocarbonée sans nécessiter notamment l'emploi d'élastomère à l'état liquide.

C'est au cours de l'étape a) de mélangeage à chaud que l'élastomère diénique est mis au contact de la résine hydrocarbonée pour fabrication du masterbatch. A l'état initial, c'est-à-dire avant son contact avec l'élastomère, la résine peut se présenter à l'état solide ou à l'état liquide. De préférence, pour un meilleur mélangeage, l'élastomère diénique solide est mis au contact de la résine hydrocarbonée à l'état liquide. Il suffit pour cela de chauffer la résine à une température supérieure à sa température de ramollissement. Selon le type de résine hydrocarbonée utilisée, la température de mélangeage à chaud est typiquement supérieure à 70°C, le plus souvent supérieure à 90°C, par exemple comprise entre 100°C et 150°C.

L'étape b) d'incorporation du système de réticulation est conduite à une température préférentiellement inférieure à 80°C, par ailleurs inférieure préférentiellement à la température de ramollissement de la résine. Ainsi, selon le type de résine hydrocarbonée utilisée, la température de mélangeage de l'étape b) est préférentiellement inférieure à 50°C, plus préférentiellement comprise entre 20°C et 40°C.

Entre les étapes a) et b) ci-dessus peut être intercalée, si nécessaire, une étape intermédiaire de refroidissement du masterbatch afin d'amener sa température à une valeur inférieure à 100°C, préférentiellement inférieure à 80°C, notamment inférieure à la température de ramollissement de la résine, ceci avant introduction (étape b)) du système de réticulation dans le masterbatch précédemment préparé.

Lorsqu'une charge telle que du noir de carbone est utilisée, elle peut être introduite au cours de l'étape a) c'est-à-dire en même temps que l'élastomère diénique insaturé et la résine hydrocarbonée, ou bien au cours de l'étape b) c'est-à-dire en même temps que le système de réticulation. On a constaté qu'une très faible proportion de noir de carbone, préférentiellement comprise entre 0,5 et 2 pce, améliorait encore le mélangeage et la fabrication de la composition, ainsi que son extrudabilité finale.

L'étape a) de fabrication du masterbatch est réalisée de préférence dans un mélangeur-extrudeur à vis tel que schématisé par exemple de manière simple à la figure 2.

On voit sur cette figure 2 un mélangeur-extrudeur à vis (20) comportant essentiellement une vis (par exemple une mono-vis) d'extrusion (21), une première pompe de dosage (22) pour l'élastomère diénique (solide) et une deuxième pompe de dosage (23) pour la résine (solide ou liquide). Les pompes de dosages (22, 23) permettent de monter en pression tout en conservant la maîtrise du dosage et les caractéristiques initiales des matériaux, la dissociation des fonctions de dosages (élastomère et résine) et de mélangeage offrant en outre une meilleure maîtrise du procédé.

Les produits, poussés par la vis d'extrusion, sont intimement mélangés sous le très fort cisaillement apporté par la rotation de la vis, progressant ainsi à travers le mélangeur, par exemple jusqu'à une partie (24) dite "hacheur-homogénéisateur", zone à la sortie de laquelle le masterbatch final (25) ainsi obtenu, progressant dans le sens de la flèche (F), est finalement extrudé à travers une filière (26) permettant d'extruder le produit aux dimensions souhaitées.

Le masterbatch ainsi extrudé, prêt à être utilisé, est ensuite transféré et refroidi par exemple sur un mélangeur externe à cylindres pour introduction du système de réticulation et de la charge optionnelle, la température à l'intérieur dudit mélangeur externe étant maintenue inférieure à 100°C, de préférence inférieure à 80°C, et par ailleurs étant préférentiellement inférieure à la température de ramollissement de la résine. Avantageusement, les cylindres ci-dessus sont refroidis, par exemple par circulation d'eau, à une température inférieure à 40°C, de préférence inférieure à 30°C, de manière à éviter tout collage parasite de la composition sur les parois du mélangeur.

Il est possible de mettre directement en forme le masterbatch en sortie du dispositif d'extrusion (20) pour faciliter son transport et/ou sa mise en place dans le mélangeur externe. On peut aussi utiliser une alimentation en continu du mélangeur externe à cylindres.

Grâce au dispositif spécifique et au procédé préférentiels décrits ci-dessus, il est possible de préparer la composition de l'invention dans des conditions industrielles satisfaisantes, sans risque de pollution des outils due à un collage parasite de la composition sur les parois des mélangeurs.

### 1-3. Utilisation de la composition auto-obturante comme couche anti-crevaison

La composition ou matière auto-obturante précédemment décrite est un composé solide (à 23°C) et élastique, qui se caractérise notamment, grâce à sa formulation spécifique, par une très grande souplesse et haute déformabilité.

Elle peut être utilisée comme couche anti-crevaison dans tout type d'objet "pneumatique", c'est-à-dire, par définition, tout objet qui prend sa forme utilisable quand on le gonfle d'air.

A titre d'exemples de tels objets pneumatiques, on peut citer les bateaux pneumatiques, les ballons ou balles utilisées pour le jeu ou le sport.

Elle est particulièrement bien adaptée à une utilisation comme couche anti-crevaison dans un objet pneumatique, produit fini ou semi-fini, en caoutchouc, tout particulièrement dans un bandage pneumatique pour véhicule automobile tel qu'un véhicule de type deux roues, tourisme ou industriel, ou non automobile tel que vélo.

Une telle couche anti-crevaison est préférentiellement disposée sur la paroi interne de l'objet pneumatique, la recouvrant totalement ou au moins en partie, mais elle peut être également intégrée complètement à sa structure interne.

L'épaisseur de la couche anti-crevaison est préférentiellement supérieure à 0,3 mm, plus préférentiellement comprise entre 0,5 mm et 10 mm (en particulier entre 1 et 5 mm).

On comprendra aisément que, selon les domaines d'application spécifiques, les dimensions et les pressions en jeu, le mode de mise en oeuvre de l'invention peut varier, la couche anti-crevaison comportant alors plusieurs gammes d'épaisseur préférentielles. Ainsi par exemple, pour des bandages pneumatiques de type tourisme, elle peut avoir une épaisseur d'au moins 0,5 mm, préférentiellement comprise entre 1 et 5 mm. Selon un autre exemple, pour des bandages pneumatiques de véhicules poids lourds ou agricole, l'épaisseur préférentielle peut se situer entre 1 et 6 mm. Selon un autre exemple, pour des bandages pneumatiques de véhicules dans le domaine du génie civil ou pour avions, l'épaisseur préférentielle peut se situer entre 2 et 10 mm. Enfin, selon un autre exemple, pour des bandages pneumatiques de vélo, l'épaisseur préférentielle peut se situer entre 0,4 et 2 mm.

La composition auto-obturante ici décrite a l'avantage de ne présenter, dans une très large gamme de températures d'utilisation des bandages pneumatiques, pratiquement aucune pénalisation en termes de résistance au roulement par rapport à un bandage pneumatique ne comportant pas une telle couche auto-obturante. Comparativement aux compositions auto-obturantes usuelles, sont notablement réduits les risques d'un fluage excessif lors d'une utilisation à température relativement élevée (typiquement supérieure à 60°C), fréquemment rencontrée lors de l'utilisation de certains bandages pneumatiques.

Bien entendu, l'invention s'applique aux cas où la composition auto-obturante précédemment décrite est utilisée dans un bandage ou tout autre objet pneumatique sans être nécessairement combinée à une couche étanche à l'air.

Toutefois, selon un mode particulier et préférentiel de réalisation de l'invention, la composition auto-obturante est associée à au moins une seconde couche étanche à l'air, pour constituer un produit stratifié multi-couches, auto-obturant et étanche à l'air, utilisable notamment comme paroi interne d'un objet pneumatique tel qu'un bandage pneumatique.

La seconde couche du stratifié peut comporter tout type de matériau susceptible de remplir la fonction de film étanche à l'air (ou plus généralement aux gaz), qu'il s'agisse par exemple d'un matériau métallique ou d'un matériau polymère. De préférence, cette couche étanche à l'air a une épaisseur supérieure à 0,05 mm, plus préférentiellement comprise entre 0,05 et 6 mm (par exemple de 0,1 à 2 mm).

Selon un mode de réalisation préférentiel, cette seconde couche étanche à l'air comporte une composition de caoutchouc butyl. Par caoutchouc butyl, doit être entendu de manière connue un copolymère d'isobutylène et d'isoprène (en abrégé IIR), ainsi que les versions halogénées, de préférence chlorées ou bromées, de ce type de copolymère. De préférence, le caoutchouc butyl est un caoutchouc butyl halogéné ou un coupage de butyls halogéné et non halogéné. Le caoutchouc butyl peut être utilisé seul ou en association avec un ou plusieurs autre(s) élastomère(s), notamment élastomères diénique(s) tels que par exemple du caoutchouc naturel ou un polyisoprène synthétique. La composition étanche à l'air comporte par ailleurs les divers additifs usuellement présents dans les couches étanches à l'air connues de l'homme du métier, tels que des charges renforçantes comme le noir de carbone, des charges lamellaires améliorant l'étanchéité (par exemple des phyllosilicates tels que kaolin, talc, mica, argiles ou argiles modifiées (*"organo clays"*)), des agents de protection tels que anti-oxydants ou anti-ozonants, un système de réticulation (par exemple à base de soufre ou de peroxyde), divers agents de mise en oeuvre ou autres stabilisants.

Les deux couches du stratifié ci-dessus peuvent être assemblées par tout moyen approprié, par exemple par un simple traitement thermique, de préférence sous pression (par exemple quelques min à 150°C sous 16 bars), à l'aide de divers agents adhésifs ou encore en intercalant une troisième couche adhésive solidarisant les deux autres.

### II. EXEMPLE DE REALISATION DE L'INVENTION

La composition auto-obturante et le stratifié multicouches décrits précédemment sont avantageusement utilisables dans les bandages pneumatiques de tous types de véhicules, en particulier dans les bandages pour véhicules tourisme susceptibles de rouler à très haute vitesse ou les bandages pour véhicules industriels tels que Poids-lourd susceptibles de rouler et fonctionner sous des conditions de températures internes particulièrement élevées.

A titre d'exemple, la figure 1 annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le bandage pneumatique 1 est caractérisé en ce que sa paroi interne comporte un stratifié multi-couches (10) comportant au moins deux couches (10a, 10b), auto-obturant grâce à sa première couche (10a) et étanche à l'air grâce à sa seconde couche (10b).

Conformément à un mode de réalisation préférentiel de l'invention, les deux couches (10a, 10b) couvrent substantiellement toute la paroi interne du bandage pneumatique, se prolongeant d'un flanc à l'autre, au moins jusqu'au niveau du crochet de jante lorsque le bandage pneumatique est en position montée. Selon d'autres modes de réalisation possibles, la couche 10a pourrait toutefois recouvrir uniquement une partie de la zone étanche à l'air (couche 10b), par exemple seulement la zone sommet du bandage pneumatique ou s'étendre au moins de la zone sommet jusqu'aux épaules ou jusqu'à mi-flanc (équateur) dudit bandage.

Selon un autre mode de réalisation préférentiel, le stratifié est disposé de telle manière que la première couche (10a) auto-obturante soit radialement la plus externe dans le bandage pneumatique, par rapport à l'autre couche (10b), comme schématisé sur la figure annexée. En d'autres termes, la couche (10a) auto-obturante recouvre la couche (10b) étanche à l'air du côté de la cavité interne 11 du bandage pneumatique 1. Un autre mode de réalisation possible est celui où cette couche (10a) est radialement la plus interne, disposée alors entre la couche étanche (10b) et le reste de la structure du bandage 1.

Dans cet exemple, la couche 10b (d'épaisseur 0,7 à 0,8 mm) est à base de caoutchouc butyl, présente une formulation conventionnelle pour une "gomme intérieure" (*"inner liner"*) qui définit usuellement, dans un bandage pneumatique conventionnel, la face radialement interne dudit bandage destinée à protéger l'armature de carcasse de la diffusion d'air provenant de l'espace intérieur au bandage. Cette couche 10b étanche à l'air permet donc le gonflement et le maintien sous pression du bandage 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

La couche 10a est quant à elle constituée d'une composition auto-obturante conforme à l'invention comportant les deux constituants essentiels que sont du caoutchouc naturel (100 pce) et une résine hydrocarbonée "Escorez 2101" de la société Exxon Mobil (point de ramollissement égal à environ 90°C) à un taux pondéral d'environ 50 pce ; elle comporte en outre une très faible quantité (1 pce) de noir de carbone (N772).

La composition auto-obturante ci-dessus a été préparée à l'aide d'une extrudeuse mono-vis (L/D = 40) telle que schématisée à la figure 2 (déjà commentée précédemment) ; le mélange des deux constituants de base (NR et résine) a été réalisé à une température (comprise entre 100 et 130°C) supérieure à la température de ramollissement de la résine. L'extrudeuse utilisée comportait deux alimentations (trémies) différentes (NR d'une part, résine d'autre part) et une pompe d'injection liquide sous pression pour la résine (injectée à une température de 130°C environ) ; quand l'élastomère et la résine sont ainsi intimement mélangés, on a constaté que le pouvoir collant parasite de la composition diminuait de manière très significative.

L'extrudeuse ci-dessus était pourvue d'une filière permettant d'extruder le masterbatch aux dimensions voulues vers un mélangeur externe à cylindres, pour incorporation finale des autres constituants, à savoir le système de vulcanisation à base de soufre (par exemple 0,5 ou 1,2 pce) et DPG (par exemple 0,3 pce) et du noir de carbone (à un taux de 1 pce), à basse température maintenue à une valeur inférieure à +30°C (refroidissement des cylindres par circulation d'eau).

La couche 10a, disposée donc entre la couche 10b et la cavité 11 du pneumatique, permet de procurer au pneumatique une protection efficace contre les pertes de pression dues aux perforations accidentelles, en permettant l'obturation automatique de ces perforations.

Si un corps étranger tel qu'un clou traverse la structure de l'objet pneumatique, par exemple une paroi telle qu'un flanc 3 ou le sommet 6 du bandage pneumatique 1, la composition servant de couche auto-obturante subit plusieurs contraintes. En réaction à ces contraintes, et grâce à ses propriétés avantageuses de déformabilité et d'élasticité, ladite composition crée une zone de contact étanche tout autour du corps. Peu importe que le contour ou profil de ce dernier soit uniforme ou régulier, la souplesse de la composition auto-obturante permet à cette dernière de s'immiscer dans des ouvertures de taille minime. Cette interaction entre la composition auto-obturante et le corps étranger confère une étanchéité à la zone affectée par ce dernier.

En cas de retrait, accidentel ou volontaire, du corps étranger, une perforation reste : celle-ci est susceptible de créer une fuite plus ou moins importante, en fonction de sa taille. La composition auto-obturante, soumise à l'effet de la pression hydrostatique, est suffisamment souple et déformable pour obturer, en se déformant, la perforation, empêchant la fuite de gaz de gonflage. Dans le cas d'un bandage pneumatique notamment, il s'est avéré que la souplesse de la composition auto-obturante permettait de supporter sans problème les efforts des parois environnantes, même lors des phases de déformations du bandage pneumatique chargé et en roulage.

Le pneumatique pourvu de sa couche anti-crevaison (10a) tel que décrit ci-dessus peut être réalisé avant ou après vulcanisation (ou cuisson).

Dans le premier cas (i.e., avant cuisson du bandage pneumatique), la composition auto-obturante est simplement appliquée de façon conventionnelle à l'endroit souhaité, pour formation de la couche 10a. La vulcanisation est ensuite effectuée classiquement.

Une variante de fabrication avantageuse, pour l'homme du métier des bandages pneumatiques, consistera par exemple au cours d'une première étape, à déposer à plat la composition auto-obturante directement sur un tambour de confection, sous la forme d'une couche (*"skim"*) d'épaisseur adaptée (par exemple 2 à 6 mm), avant de recouvrir cette dernière avec la couche étanche à l'air puis le reste de la structure du bandage pneumatique, selon des techniques de fabrication bien connues de l'homme du métier. Ce type de procédé permet en outre de réaliser aisément le second mode de réalisation dans lequel la couche d'étanchéité 10b serait radialement la plus externe.

Dans le second cas (i.e., après cuisson du bandage pneumatique), la composition auto-obturante est appliquée à l'intérieur du bandage pneumatique cuit par tout moyen approprié, par exemple par collage, par pulvérisation ou encore extrusion et soufflage d'un film d'épaisseur appropriée.

Lors d'essais, des bandages pneumatiques de type tourisme, de dimension 205/55 R16 "marque Michelin, Energy 3" ont été testés. La paroi interne des pneumatiques (comportant déjà la couche étanche à l'air 10b) a été recouverte par la couche auto-obturante (10a) précédemment décrite, d'une épaisseur de 3 mm, puis les pneumatiques vulcanisés.

Sur un des bandages pneumatiques monté et gonflé, cinq perforations de 5 mm de diamètre ont été réalisées, à travers la bande de roulement et le bloc sommet d'une part, les flancs d'autre part, à l'aide de poinçons qui ont été immédiatement retirés.

De manière inattendue, ce bandage a résisté à un roulage sur volant à 150 km/h, sous une charge nominale de 400 kg, sans perte de pression pendant plus de 1 500 km, distance au-delà de laquelle le roulage a été stoppé.

Sur un autre bandage pneumatique, on a procédé de la même façon en laissant cette fois en place les objets perforants, pendant une semaine. Le même excellent résultat a été obtenu.

Sans composition auto-obturante et dans les mêmes conditions que ci-dessus, le bandage pneumatique ainsi perforé perd sa pression en moins d'une minute, devenant totalement inapte au roulage.

## Revendications

1. Composition d'élastomère auto-obturante, utilisable notamment comme couche anti-crevaison dans un objet pneumatique, comportant au moins, pce signifiant parties en poids pour cent parties d'élastomère solide :
- à titre d'élastomère majoritaire, un élastomère diénique insaturé ;
- entre 30 et 90 pce d'une résine hydrocarbonée ;
- 0 à moins de 30 pce d'une charge.

2. Composition selon la revendication 1, dans laquelle l'élastomère diénique insaturé est choisi dans le groupe constitué par les polybutadiènes, le caoutchouc naturel, les polyisoprènes de synthèse, les copolymères de butadiènes, les copolymères d'isoprène et les mélanges de tels élastomères.

3. Composition selon la revendication 2, dans laquelle l'élastomère diénique insaturé est un élastomère isoprénique, de préférence choisi dans le groupe constitué par le caoutchouc naturel, les polyisoprènes de synthèse et les mélanges de tels élastomères.

4. Composition selon l'une quelconque des revendications 1 à 3, dans laquelle le taux d'élastomère diénique insaturé est supérieur à 50 pce, de préférence supérieur à 70 pce.

5. Composition selon l'une quelconque des revendications 1 à 4, dans laquelle l'élastomère isoprénique, de préférence du caoutchouc naturel, est le seul élastomère de la composition.

6. Composition selon l'une quelconque des revendications 1 à 5, dans laquelle la masse moléculaire moyenne en nombre de l'élastomère diénique est comprise entre 100 000 et 5 000 000 g/mol.

7. Composition selon l'une quelconque des revendications 1 à 6, dans laquelle le taux de résine hydrocarbonée est compris dans un domaine de 45 à 75 pce.

8. Composition selon l'une quelconque des revendications 1 à 7, dans laquelle la résine hydrocarbonée présente une Tg, température de transition vitreuse, qui est supérieure à 0°C, de préférence supérieure à +20°C.

9. Composition selon la revendication 8, dans laquelle la résine hydrocarbonée présente une Tg comprise entre +25 et +100°C.

10. Composition selon l'une quelconque des revendications 1 à 9, dans laquelle la masse moléculaire moyenne en nombre de la résine hydrocarbonée est comprise entre 400 et 2 000 g/mol.

11. Composition selon l'une quelconque des revendications 1 à 10, dans laquelle la résine hydrocarbonée est choisie dans le groupe constitué par les résines d'homopolymère ou copolymère de cyclopentadiène (CPD), les résines d'homopolymère ou copolymère de dicyclopentadiène (DCPD), les résines d'homopolymère ou copolymère terpène, les résines d'homopolymère ou copolymère de coupe C5, et les mélanges de ces résines.

12. Composition selon la revendication 11, dans laquelle la résine hydrocarbonée est choisie dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

13. Composition selon l'une quelconque des revendications 1 à 12, comportant 0 à moins de 20 pce, de préférence 0 à moins de 10 pce de charge.

14. Composition selon l'une quelconque des revendications 1 à 13, comportant à titre de charge renforçante du noir de carbone.

15. Composition selon la revendication 13 ou 14, comportant moins de 5 pce, de préférence moins de 2 pce de noir de carbone.

16. Composition selon la revendication 15, comportant entre 0,5 et 2 pce de noir de carbone.

17. Composition selon l'une quelconque des revendications 1 à 16, comportant en outre un système de vulcanisation.

18. Composition selon la revendication 17, dans laquelle le système de vulcanisation est à base de soufre et d'un dérivé guanidique.

19. Composition selon la revendication 18, dans laquelle le dérivé guanidique est la diphénylguanidine (DPG).

20. Composition selon la revendication 18 ou 19, dans laquelle le système de vulcanisation comporte entre 0,1 et 1,5 pce de soufre et entre 0 et 1,5 pce de dérivé guanidique.

21. Composition selon la revendication 20, dans laquelle le système de vulcanisation comporte entre 0,2 et 1,2 pce de soufre et entre 0 et 1,0 pce de dérivé guanidique.

22. Objet pneumatique pourvu d'une couche anti-crevaison, ladite couche comprenant, à titre de composition auto-obturante, une composition élastomère selon l'une quelconque des revendications 1 à 21.

23. Objet selon la revendication 22, dans lequel la composition auto-obturante est utilisée sous la forme d'une couche anti-crevaison dont l'épaisseur est supérieure à 0,3 mm.

24. Objet selon la revendication 23, dans lequel la couche anti-crevaison a une épaisseur comprise entre 0,5 mm et 10 mm.

25. Objet selon l'une quelconque des revendications 22 à 24, dans lequel la couche anti-crevaison est déposée sur la paroi interne de l'objet pneumatique.

26. Objet selon l'une quelconque des revendications 22 à 25, dans lequel l'objet pneumatique est un objet en caoutchouc.

27. Objet selon la revendication 26, dans lequel l'objet pneumatique est un bandage pneumatique.

28. Objet selon l'une quelconque des revendications 22 à 27, dans lequel la couche anti-crevaison est associée à une couche étanche à l'air constituant ainsi un stratifié auto-obturant et étanche à l'air.

29. Objet selon la revendication 28, dans lequel la couche étanche à l'air est à base de caoutchouc butyl.

## Patentansprüche

1. Selbstversiegelnde Elastomerzusammensetzung, die insbesondere als Anti-Pannen-Schicht in einem pneumatischen Objekt verwendet werden kann und mindestens Folgendes umfasst, wobei phe Gewichtsteile pro hundert Teile festes Elastomer bedeutet:
- als Hauptelastomer ein ungesättigtes Dienelastomer;
- zwischen 30 und 90 phr eines Kohlenwasserstoffharzes;
- 0 bis weniger als 30 phe eines Füllstoffs.

2. Zusammensetzung nach Anspruch 1, wobei das ungesättigte Dienelastomer aus der Gruppe bestehend aus Polybutadienen, Naturkautschuk, synthetischen Polyisoprenen, Butadien-Copolymeren, Isopren-Copolymeren und Mischungen derartiger Elastomere ausgewählt ist.

3. Zusammensetzung nach Anspruch 2, wobei das ungesättigte Dienelastomer ein Isoprenelastomer ist, das vorzugsweise aus der Gruppe bestehend aus Naturkautschuk, synthetischen Polyisoprenen und Mischungen derartiger Elastomere ausgewählt ist.

4. Zusammensetzung nach einem der Ansprüche 1 bis 3, wobei der Gehalt an ungesättigtem Dienelastomer mehr als 50 phe und vorzugsweise mehr als 70 phe beträgt.

5. Zusammensetzung nach einem der Ansprüche 1 bis 4, wobei das Isoprenelastomer, vorzugsweise Naturkautschuk, das einzige Elastomer der Zusammensetzung ist.

6. Zusammensetzung nach einem der Ansprüche 1 bis 5, wobei die zahlenmittlere Molmasse des Dienelastomers zwischen 100.000 und 5.000.000 g/mol liegt.

7. Zusammensetzung nach einem der Ansprüche 1 bis 6, wobei der Gehalt an Kohlenwasserstoffharz in einem Bereich von 45 bis 75 phe liegt.

8. Zusammensetzung nach einem der Ansprüche 1 bis 7, wobei das Kohlenwasserstoffharz eine Glasübergangstemperatur Tg aufweist, die mehr als 0 °C und vorzugsweise mehr als +20 °C beträgt.

9. Zusammensetzung nach Anspruch 8, wobei das Kohlenwasserstoffharz eine Tg zwischen +25 und +100 °C aufweist.

10. Zusammensetzung nach einem der Ansprüche 1 bis 9, wobei die zahlenmittlere Molmasse des Kohlenwasserstoffharzes zwischen 400 und 2000 g/mol liegt.

11. Zusammensetzung nach einem der Ansprüche 1 bis 10, wobei das Kohlenwasserstoffharz aus der Gruppe bestehend aus Cyclopentadien(CPD)-Homopolymer- oder -Copolymerharzen, Dicyclopentadien(DCPD)-Homopolymer- oder -Copolymerharzen, Terpen-Homopolymer- oder -Copolymerharzen, C5-Schnitt-Homopolymer- oder - Copolymerharzen und Mischungen dieser Harze ausgewählt ist.

12. Zusammensetzung nach Anspruch 11, wobei das Kohlenwasserstoffharz aus der Gruppe bestehend aus (D)CPD-Homopolymerharzen, (D)CPD/Styrol-Copolymerharzen, Polylimonenharzen, Limonen/Styrol-Copolymerharzen, Limonen/D(CPD)-Copolymerharzen, C5-Schnitt/Styrol-Copolymerharzen, C5-Schnitt/C9-Schnitt-Copolymerharzen und Mischungen dieser Harze ausgewählt ist.

13. Zusammensetzung nach einem der Ansprüche 1 bis 12, die 0 bis weniger als 20 phe, vorzugsweise 0 bis weniger als 10 phe, Füllstoff umfasst.

14. Zusammensetzung nach einem der Ansprüche 1 bis 13, die als verstärkenden Füllstoff Ruß umfasst.

15. Zusammensetzung nach Anspruch 13 oder 14, die weniger als 5 phe, vorzugsweise weniger als 2 phe, Ruß umfasst.

16. Zusammensetzung nach Anspruch 15, die zwischen 0,5 und 2 phe Ruß umfasst.

17. Zusammensetzung nach einem der Ansprüche 1 bis 16, die außerdem ein Vulkanisationssystem umfasst.

18. Zusammensetzung nach Anspruch 17, wobei das Vulkanisationssystem auf Schwefel und einem Guanidinderivat basiert.

19. Zusammensetzung nach Anspruch 18, wobei sich bei dem Guanidinderivat um Diphenylguanidin (DPG) handelt.

20. Zusammensetzung nach Anspruch 18 oder 19, wobei das Vulkanisationssystem zwischen 0,1 und 1,5 phe Schwefel und zwischen 0 und 1,5 phe Guanidinderivat umfasst.

21. Zusammensetzung nach Anspruch 20, wobei das Vulkanisationssystem zwischen 0,2 und 1,2 phe Schwefel und zwischen 0 und 1,0 phe Guanidinderivat umfasst.

22. Pneumatisches Objekt mit einer Anti-Pannen-Schicht, wobei die Schicht als selbstversiegelnde Zusammensetzung eine Elastomerzusammensetzung nach einem der Ansprüche 1 bis 21 umfasst.

23. Objekt nach Anspruch 22, wobei die selbstversiegelnde Zusammensetzung in Form einer Anti-Pannen-Schicht mit einer Dicke von mehr als 0,3 mm verwendet wird.

24. Objekt nach Anspruch 23, wobei die Anti-Pannen-Schicht eine Dicke zwischen 0,5 mm und 10 mm aufweist.

25. Objekt nach einem der Ansprüche 22 bis 24, wobei die Anti-Pannen-Schicht auf der Innenwand des pneumatischen Objekts angeordnet ist.

26. Objekt nach einem der Ansprüche 22 bis 25, wobei es sich bei dem pneumatischen Objekt um ein Objekt aus Kautschuk handelt.

27. Objekt nach Anspruch 26, wobei es sich bei dem pneumatischen Objekt um einen Luftreifen handelt.

28. Objekt nach einem der Ansprüche 22 bis 27, wobei die Anti-Pannen-Schicht mit einer luftdichten Schicht kombiniert ist und somit einen selbstversiegelnden und luftdichten Schichtstoff bildet.

29. Objekt nach Anspruch 28, wobei die luftdichte Schicht auf Butylkautschuk basiert.

## Claims

1. Self-sealing elastomer composition that can be used especially as a puncture-resistant layer in an inflatable article, comprising at least, phr denoting parts by weight per hundred parts of solid rubber:
- as predominant elastomer, an unsaturated diene elastomer;
- between 30 and 90 phr of a hydrocarbon resin; and
- 0 to less than 30 phr of a filler.

2. Composition according to Claim 1, wherein the unsaturated diene elastomer is chosen from the group formed by polybutadienes, natural rubber, synthetic polyisoprenes, butadiene copolymers, isoprene copolymers and blends of these elastomers.

3. Composition according to Claim 2, wherein the unsaturated diene elastomer is an isoprene elastomer, preferably chosen from the group formed by natural rubber, synthetic polyisoprenes and blends of these elastomers.

4. Composition according to any one of Claims 1 to 3, wherein the unsaturated diene elastomer content is greater than 50 phr, preferably greater than 70 phr.

5. Composition according to any one of Claims 1 to 4, wherein the isoprene elastomer, preferably natural rubber, is the sole elastomer of the composition.

6. Composition according to any one of Claims 1 to 5, wherein the number-average molecular weight of the diene elastomer is between 100 000 and 5 000 000 g/mol.

7. Composition according to any one of Claims 1 to 6, wherein the hydrocarbon resin content is in the 45 to 75 phr range.

8. Composition according to any one of Claims 1 to 7, wherein the hydrocarbon resin has a T_{g}, glass transition temperature, above 0°C, preferably above +20°C.

9. Composition according to Claim 8, wherein the hydrocarbon resin has a T_{g} of between +25 and +100°C.

10. Composition according to any one of Claims 1 to 9, wherein the number-average molecular weight of the hydrocarbon resin is between 400 and 2000 g/mol.

11. Composition according to any one of Claims 1 to 10, wherein the hydrocarbon resin is chosen from the group formed by cyclopentadiene (CPD) homopolymer or copolymer resins, dicyclopentadiene (DCPD) homopolymer or copolymer resins, terpene homopolymer or copolymer resins, C₅-cut homopolymer or copolymer resins and blends of these resins.

12. Composition according to Claim 11, wherein the hydrocarbon resin is chosen from the group formed by (D)CPD homopolymer resins, (D)CPD/styrene copolymer resins, polylimonene resins, limonene/styrene copolymer resins, limonene/D(CPD) copolymer resins, C₅-cut/styrene copolymer resins, C₅-cut/C₉-cut copolymer resins and blends of these resins.

13. Composition according to any one of Claims 1 to 12, containing 0 to less than 20 phr, preferably 0 to less than 10 phr, of filler.

14. Composition according to any one of Claims 1 to 13, containing carbon black as reinforcing filler.

15. Composition according to Claim 13 or 14, containing less than 5 phr, preferably less than 2 phr, of carbon black.

16. Composition according to Claim 15, containing between 0.5 and 2 phr of carbon black.

17. Composition according to any one of Claims 1 to 16, furthermore containing a vulcanization system.

18. Composition according to Claim 17, wherein the vulcanization system is based on sulphur and a guanidine derivative.

19. Composition according to Claim 18, wherein the guanidine derivative is diphenylguanidine (DPG).

20. Composition according to Claim 18 or 19, wherein the vulcanization system comprises between 0.1 and 1.5 phr of sulphur and between 0 and 1.5 phr of guanidine derivative.

21. Composition according to Claim 20, wherein the vulcanization system comprises between 0.2 and 1.2 phr of sulphur and between 0 and 1.0 phr of guanidine derivative.

22. Inflatable article provided with a puncture-resistant layer, said layer comprising, as self-sealing composition, an elastomer composition according to any one of Claims 1 to 21.

23. Article according to Claim 22, wherein the self-sealing composition is used in the form of a puncture-resistant layer having a thickness of greater than 0.3 mm.

24. Article according to Claim 23, wherein the puncture-resistant layer has a thickness of between 0.5 mm and 10 mm.

25. Article according to any one of Claims 22 to 24, wherein the puncture-resistant layer is deposited on the internal wall of the inflatable article.

26. Article according to any one of Claims 22 to 25, which is a rubber article.

27. Article according to Claim 26, which is a tyre.

28. Article according to any one of Claims 22 to 27, wherein the puncture-resistant layer is combined with an airtight layer thus constituting an airtight self-sealing laminate.

29. Article according to Claim 28, wherein the airtight layer is based on butyl rubber.
